# EUROPEAN PATENT APPLICATION

(11) **EP 3 763 916 A1**
(43) Date of publication of application: **13.01.2021**
(21) Application number: 20172682.5
(22) Date of filing: 28.12.2012
(51) Int. Cl.: F01D 5/14, F02C 7/36, F02K 3/06

(54) **FAN STAGGER ANGLE FOR GEARED GAS TURBINE ENGINE**

(30) Priority: 31.01.2012 US 201261592814 P
(62) Divisional of application: 16176856.9
(71) Applicant: Raytheon Technologies Corporation, Farmington, CT 06032 (US)
(72) Inventor: GALLAGHER, Edward J., West Hartford, CT Connecticut 06107 (US); MONZON, Byron R., Cromwell, CT Connecticut 06416 (US); LIU, Ling, Glastonbury, CT Connecticut 06033 (US); LI, Linda S., Middlefield, CT Connecticut 06455 (US); WHITLOW, Darryl, Middletown, CT Connecticut 06457 (US)
(74) Representative: Dehns

(57) **Abstract**

A gas turbine engine includes a spool, a turbine coupled with the spool, a propulsor coupled to be rotated about an axis by the turbine through the spool and a gear assembly coupled between the propulsor and the spool such that rotation of the spool results in rotation of the propulsor at a different speed than the spool. The propulsor includes a hub and a row of propulsor blades that extends from the hub. Each of the propulsor blades has a span between a root at the hub and a tip, and a chord between a leading edge and a trailing edge such that the chord forms a stagger angle α with the axis. The stagger angle α is less than 62° at all positions along the span, with said hub being at 0% of the span and the tip being at 100% of the span.

## Description

### BACKGROUND

This disclosure relates to gas turbine engines and, more particularly, to an engine having a geared turbofan architecture that is designed to operate with a high bypass ratio and a low pressure ratio.

The propulsive efficiency of a gas turbine engine depends on many different factors, such as the design of the engine and the resulting performance debits on the fan that propels the engine. As an example, the fan rotates at a high rate of speed such that air passes over the blades at transonic or supersonic speeds. The fast-moving air creates flow discontinuities or shocks that result in irreversible propulsive losses. Additionally, physical interaction between the fan and the air causes downstream turbulence and further losses. Although some basic principles behind such losses are understood, identifying and changing appropriate design factors to reduce such losses for a given engine architecture has proven to be a complex and elusive task.

### SUMMARY

A gas turbine engine according to an exemplary aspect of the present disclosure includes a spool, a turbine coupled with the spool, a propulsor coupled to be rotated about an axis through the spool and a gear assembly coupled between the propulsor and the spool such that rotation of the spool results in rotation of the propulsor at a different speed than the spool. The propulsor includes a hub and a row of propulsor blades extending from the hub. Each of the propulsor blades has a span between a root at the hub and a tip, and a chord between a leading edge and a trailing edge such that the chord forms a stagger angle α with the axis. The stagger angle α is less than 62° at all positions along the span, with the hub being at 0% of the span and the tip being at 100% of the span.

In a further non-limiting embodiment of any of the foregoing embodiments, the stagger angle α at 25% of the span is less than 23°.

In a further non-limiting embodiment of any of the foregoing embodiments, the stagger angle α at 25% of the span is 16-21°.

In a further non-limiting embodiment of any of the foregoing embodiments, the stagger angle α at 50% of the span is less than 35°.

In a further non-limiting embodiment of any of the foregoing embodiments, the stagger angle α at 50% of the span is 28-33.

In a further non-limiting embodiment of any of the foregoing embodiments, the stagger angle α at 75% of the span is less than 48°.

In a further non-limiting embodiment of any of the foregoing embodiments, the stagger angle α at 75% of the span is 39-45°.

In a further non-limiting embodiment of any of the foregoing embodiments, the stagger angle α at 100% of the span is less than 62°.

In a further non-limiting embodiment of any of the foregoing embodiments, the stagger angle α at 100% of the span is 50-59°.

In a further non-limiting embodiment of any of the foregoing embodiments, the stagger angle α at 25% of the span is less than 23°, the stagger angle α at 50% of the span is less than 35°, the stagger angle α at 75% of the span is less than 48° and the stagger angle α at 100% of the span is less than 62°.

In a further non-limiting embodiment of any of the foregoing embodiments, the stagger angle α at 25% of the span is 16-21°, the stagger angle α at 50% of the span is 28-33°, the stagger angle α at 75% of the span is 39-45° and the stagger angle α at 100% of the span is 50-59°.

In a further non-limiting embodiment of any of the foregoing embodiments, each of the propulsor blades includes a stagger angle α₇₅ at 75% of the span and a stagger angle α₂₅ at 25% of the span such that a ratio of α₇₅ / α₂₅ is 1.7-2.9.

In a further non-limiting embodiment of any of the foregoing embodiments, each of the propulsor blades includes a stagger angle α₇₅ at 75% of the span and a stagger angle α₂₅ at 25% of the span such that a ratio of α₇₅ / α₂₅ is 2.1-2.5.

In a further non-limiting embodiment of any of the foregoing embodiments, the propulsor is located at an inlet of a bypass flow passage having a design pressure ratio that is from 1.1 to 1.55 with regard to an inlet pressure and an outlet pressure of the bypass flow passage.

In a further non-limiting embodiment of any of the foregoing embodiments, the propulsor is located at an inlet of a bypass flow passage having a design pressure ratio that is from 1.1 to 1.35 with regard to an inlet pressure and an outlet pressure of the bypass flow passage.

In a further non-limiting embodiment of any of the foregoing embodiments, the propulsor is located at an inlet of a bypass flow passage having a design pressure ratio that is from 1.35 to 1.55 with regard to an inlet pressure and an outlet pressure of the bypass flow passage.

In a further non-limiting embodiment of any of the foregoing embodiments, the chord has a chord dimension (CD) at the tips, the row of propulsor blades defines a circumferential pitch (CP) with regard to the tips, and the row of propulsor blades has a solidity value (R) defined as CD/CP that is from 0.6 to 1.3.

In a further non-limiting embodiment of any of the foregoing embodiments, the propulsor has from 10 to 20 blades.

In a further non-limiting embodiment of any of the foregoing embodiments, the gear assembly has a gear reduction ratio of greater than about 2.3:1.

In a further non-limiting embodiment of any of the foregoing embodiments, the gear assembly has a gear reduction ratio of greater than about 2.5:1.

In a further non-limiting embodiment of any of the foregoing embodiments, the propulsor is a fan that has a design bypass ratio greater than about 6 with regard bypass air flow and core airflow.

In a further non-limiting embodiment of any of the foregoing embodiments, the propulsor is a fan that has a design bypass ratio greater than about 10 with regard bypass air flow and core airflow.

A propulsor blade according to an exemplary aspect of the present disclosure includes an airfoil extending over a span between a root and a tip and having a chord between a leading edge and a trailing edge such that the chord forms a stagger angle α with regard to a rotational axis of the airfoil, and the stagger angle α is less than 62° at all positions along the span, with the hub being at 0% of the span and the tip being at 100% of the span.

In a further non-limiting embodiment of any of the foregoing embodiments, the stagger angle α at 25% of the span is less than 23°, the stagger angle α at 50% of the span is less than 35°, the stagger angle α at 75% of the span is less than 48° and the stagger angle α at 100% of the span is less than 62°.

In a further non-limiting embodiment of any of the foregoing embodiments, the stagger angle α at 25% of the span is 16-21°, the stagger angle α at 50% of the span is 28-33°, the stagger angle α at 75% of the span is 39-45° and the stagger angle α at 100% of the span is 50-59°.

In a further non-limiting embodiment of any of the foregoing embodiments, the propulsor blade includes a stagger angle α₇₅ at 75% of the span and a stagger angle α₂₅ at 25% of the span such that a ratio of α₇₅ / α₂₅ is 1.7-2.9.

In a further non-limiting embodiment of any of the foregoing embodiments, the propulsor blade includes a stagger angle α₇₅ at 75% of the span and a stagger angle α₂₅ at 25% of the span such that a ratio of α₇₅ / α₂₅ is 2.1-2.5.

A method for controlling propulsion losses in a gas turbine engine, according to an exemplary aspect of the present disclosure, includes establishing a design pressure ratio that is from 1.1 to 1.55 with regard to an inlet pressure and an outlet pressure of a bypass flow passage in which a propulsor of the gas turbine engine is located. The propulsor includes a hub and a row of propulsor blades extending from the hub. Each of the propulsor blades has a span between a root at the hub and a tip, and a chord between a leading edge and a trailing edge such that the chord forms a stagger angle α with a rotational axis of the propulsor. In response to the design pressure ratio, the stagger angle α is establised to be less than 62° at all positions along the span, with the hub being at 0% of the span and the tip being at 100% of the span.

### BRIEF DESCRIPTION OF THE DRAWINGS

The various features and advantages of the disclosed examples will become apparent to those skilled in the art from the following detailed description. The drawings that accompany the detailed description can be briefly described as follows.
Figure 1 illustrates a schematic cross-section of a gas turbine engine.
Figure 2 illustrates a perspective view of a fan section of the engine of Figure 1.
Figure 3 illustrates an isolated view of a propulsor blade and portion of a hub.
Figure 4 illustrates an axial view of a propulsor blade and portion of a hub.
Figure 5 illustrates a graph with plot lines of stagger angle α (degree) versus % span.

### DETAILED DESCRIPTION

In a turbofan engine, the fan (e.g., propulsor) rotates at a high rate in the relative frame of reference. For fan blades of the fan, a considerable loss source is shock loss associated with the high rate of rotational speed. Particularly in the outboard region of the fan blades, the air passes over the blades at supersonic or transonic speed and creates flow shocks that result in propulsive efficiency losses.

The use of a fan drive gear assembly allows for a differentiation of design point rotational speed between the fan and the turbine. The turbine is coupled to the fan by a shaft and rotates at a higher rate of speed than the fan for enhanced turbine performance. The low fan speeds enabled by the gear assembly generally reduce shock loss, however, there is additional shock loss and debit to propulsive efficiency due to the geometry of the fan blades. To further reduce shock loss and enhance propulsive efficiency in low speed regimes, inherently different fan blade geometry is needed.

Stagger angle of the fan blades is one geometry factor that influences shock loss and propulsive efficiency in geared architecture gas turbine engines. As will be described, a disclosed gas turbine engine 20 incorporates a geared architecture and a propulsor 42 with a strategically selected stagger angle profile in a hot, running condition to reduce shock loss and enhance propulsive efficiency.

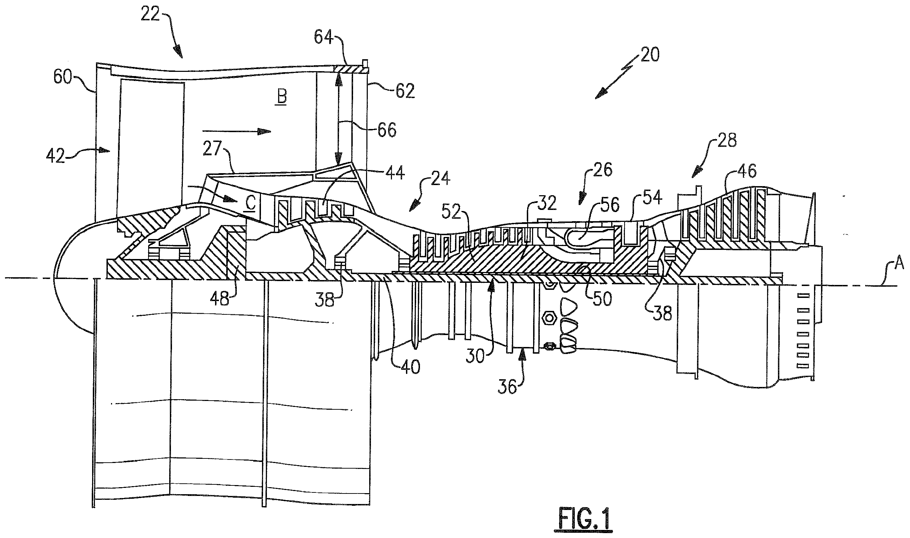

Figure 1 schematically illustrates the gas turbine engine 20. In this example, the gas turbine engine 20 is a two-spool turbofan that generally incorporates a fan section 22, a compressor section 24, a combustor section 26 and a turbine section 28. Although depicted as a turbofan gas turbine engine, it is to be understood that the concepts described herein are not limited to use with the disclosed arrangement. Alternative engine architectures may include a single-spool design, a three-spool design, or an open rotor design, among other systems or features.

The engine 20 includes a low speed spool 30 and high speed spool 32 mounted for rotation about an engine central longitudinal axis A relative to an engine static structure 36 via several bearing systems 38. The fan section 22 and the compressor section 24 are concentric with the engine central longitudinal axis A. The low speed spool 30 generally includes an inner shaft 40 that is coupled with the propulsor 42, a low pressure compressor 44 and a low pressure turbine 46. Rotation of the low speed spool 30 results in rotation of the propulsor 42 through the inner shaft 40 and a gear assembly 48, which allows the propulsor 42 to rotate at a different (e.g. lower) angular speed. It is to be understood that although this example discloses that a turbine-driven arrangement of the propulsor 42, it is also contemplated that the propulsor 42 can alternatively be driven by a motor or other type of mover.

The high speed spool 32 includes an outer shaft 50 that is coupled with a high pressure compressor 52 and a high pressure turbine 54. A combustor 56 is arranged between the high pressure compressor 52 and the high pressure turbine 54. The inner shaft 40 and the outer shaft 50 are concentric and rotate about the engine central longitudinal axis A, which is collinear with their longitudinal axes.

The fan section 22 drives air along a bypass flow passage B while the compressor section 24 receives air along a core flow passage C for compression and communication into the combustor section 26. A core airflow in the core flow passage C is compressed in the low pressure compressor 44 then the high pressure compressor 52, mixed with the fuel and burned in the combustor 56, and then expanded over the high pressure turbine 54 and low pressure turbine 46. The turbines 46 and 54 rotationally drive the respective low speed spool 30 and high speed spool 32 in response to the expansion.

As shown, the propulsor 42 is arranged at an inlet 60 of the bypass flow passage B and the core flow passage C. Air flow through the bypass flow passage B exits the engine 20 through an outlet 62 or nozzle. For a given design of the propulsor 42, the inlet 60 and the outlet 62 establish a design pressure ratio with regard to an inlet pressure at the inlet 60 and an outlet pressure at the outlet 62 of the bypass flow passage B. The design pressure ratio is determined based upon the stagnation inlet pressure and the stagnation outlet pressure at a design rotational speed of the engine 20. In that regard, the engine 20 optionally includes a variable area nozzle 64 within the bypass flow passage B. The variable area nozzle 64 is operative to change a cross-sectional area 66 of the outlet 62 to thereby control the pressure ratio via changing pressure within the bypass flow passage B. The design pressure ratio may be defined with the variable area nozzle 64 fully open or fully closed.

In a further example, the engine 20 is a high-bypass geared aircraft engine that has a bypass ratio that is greater than about six (6), with an example embodiment being greater than ten (10), the gear assembly 48 is an epicyclic gear train, such as a planetary gear system or other gear system, with a gear reduction ratio of greater than about 2.3:1 or greater than about 2.5:1 and the low pressure turbine 46 has a pressure ratio that is greater than about 5. Low pressure turbine 46 pressure ratio is pressure measured prior to inlet of low pressure turbine 46 as related to the pressure at the outlet of the low pressure turbine 46 prior to an exhaust nozzle. It should be understood, however, that the above parameters are only exemplary.

A significant amount of thrust is provided by the bypass flow passage B due to the high bypass ratio. The fan section 22 of the engine 20 is designed for a particular flight condition -- typically cruise at about 0.8 Mach and about 35,000 feet (10668 m). The flight condition of 0.8 Mach and 35,000 ft (10668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point and is an engine fuel consumption in pounds per hour divided by the net thrust. The result is the amount of fuel required to produce one pound of thrust. The TSFC unit is pounds per hour per pounds of thrust (lb/hr/lb Fn). "Fan pressure ratio" is the pressure ratio across the fan blade alone, without a Fan Exit Guide Vane ("FEGV") system. The low fan pressure ratio as disclosed herein according to one non-limiting embodiment is 1.1 to 1.55. "Low corrected fan tip speed" is the actual fan tip speed in ft/sec divided by an industry standard temperature correction of [(Tambient deg R) / 518.7)^0.5]. The "Low corrected fan tip speed" as disclosed herein according to one non-limiting embodiment is less than about 1150 ft / second (350.5 m/s).

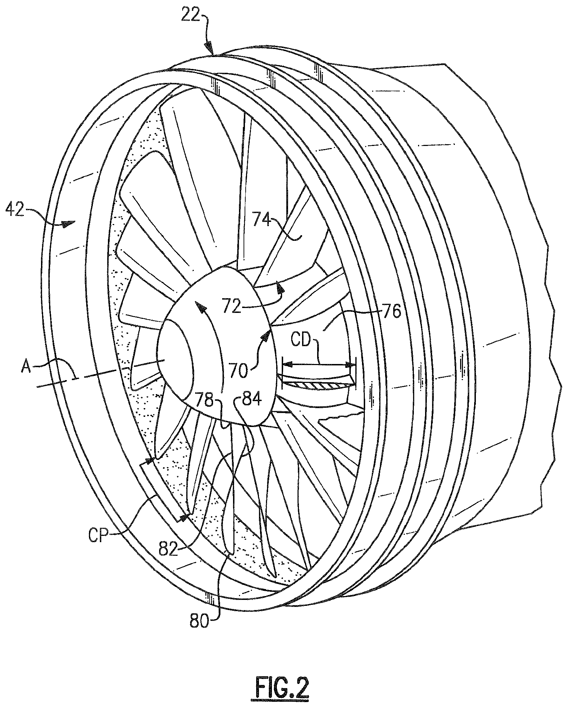

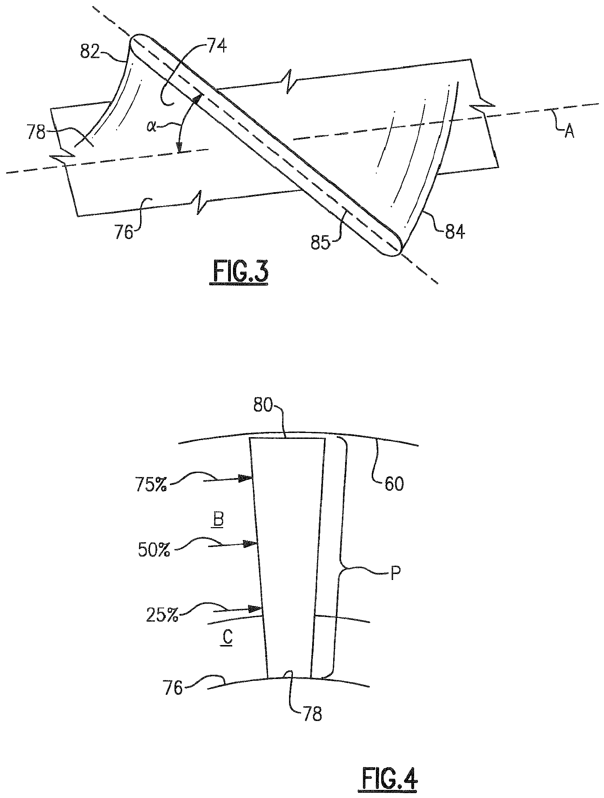

Referring to Figure 2, the propulsor 42, which in this example is a fan, includes a rotor 70 having a row 72 of propulsor blades 74, also known as airfoils, that extend circumferentially around a hub 76. Each of the propulsor blades 74 extends radially outwardly from the hub 76 between a root 78 and a tip 80, and in a chord direction (axially and circumferentially) between a leading edge 82 and a trailing edge 84. A chord 85 (Figure 3), also represented by chord dimension (CD), is a straight line that extends between the leading edge 82 and the trailing edge 84 of the propulsor blade 74. The chord dimension (CD) may vary along the span of the propulsor blade 74. For the purpose of later defining solidity, the chord dimension (CD) is taken at the tips 80 of the propulsor blades 74. The row 72 of propulsor blades 74 also defines a circumferential pitch (CP) that is equivalent to the arc distance between the tips 80 of neighboring propulsor blades 74.

Figure 3 shows an isolated view of one of the propulsor blades 74 and portion of the hub 76. As shown, the propulsor blade 74 is sectioned at a radial position between the root 78 and the tip 80. The radial position along the propulsor blade 74 can be represented as a percentage of the span of the propulsor blade 74, with the root 78 representing a 0% span and the tip 80 representing a 100% span. The chord 85 is shown on the section of the propulsor blade 74. The chord 85 forms an angle, stagger angle α, with the engine central longitudinal axis A. The stagger angle α varies with position along the span, and varies between a hot, running condition and a cold, static ("on the bench") condition. The angle can alternatively be represented as an angle between the chord 85 and a line that is orthogonal to the engine central longitudinal axis A, which is equal to 90° - α.

The gear assembly 48 of the disclosed example permits the propulsor 42 to be driven by the low pressure turbine 46 through the low speed spool 30 at a lower angular speed than the low pressure turbine 46. The stagger angle α profile in a hot, running condition along the span of the propulsor blades 74 provides efficient operation in cruise at that the lower speeds enabled by the gear assembly 48, to thereby reduce shock loss and enhance propulsive efficiency. As used herein, the hot, running condition is the condition during cruise of the gas turbine engine 20. For example, the stagger angle α profile in the hot, running condition can be determined in a known manner using finite element analysis.

Figure 4 shows an axial view of one of the propulsor blades 74, which is representative of all of the propulsor blades 74, and portion of the hub 76. The propulsor blade 74 includes a stagger angle α profile (P) over the full span that is designed for the given geared architecture and design pressure ratio, as described above. In the illustrated example, the stagger angle α varies over the span and is less than 62° at all positions along the span, with the hub 76 being at 0% of the span and the tip 80 being at 100% of the span.

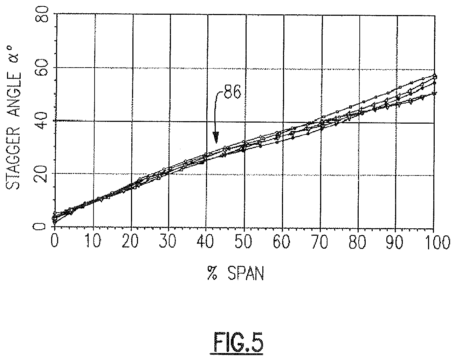

Figure 5 shows a graph with plot lines 86 of stagger angle α versus % span for several example propulsor blades 74. As shown, each of the plot lines 86 has a stagger angle α profile (P) such that the stagger angles α at all positions along the full span are less than 62°.

The disclosed stagger angle α that is less than 62° at all positions along the span enhances the propulsive efficiency of the disclosed engine 20. For instance, the disclosed stagger angle α profile P is designed for the geared turbofan architecture of the engine 20 that utilizes the gear assembly 48. That is, the gear assembly 48 allows the propulsor 42 to rotate at a different, lower speed than the low speed spool 30 and operate efficiently within a predetermined design pressure ratio. Thus, the disclosed geometry with regard to the stagger angle α in combination with the gear assembly 48 and disclosed design pressure ratio permits a reduction in performance debit shock losses and corresponding enhancement of propulsive efficiency. The following additional examples further reduce performance debit shock losses and enhance propulsive efficiency.

In a further embodiment, the stagger angle α at 25% of the span is less than 23°. In a further example, the stagger angle α at 25% of the span is 16-21°.

In a further embodiment, the stagger angle α at 50% of the span is less than 35°. In a further example, the stagger angle α at 50% of the span is 28-33°.

In a further embodiment, the stagger angle α at 75% of the span is less than 48°. In a further example, the stagger angle α at 75% of the span is 39-45°.

In a further embodiment, the stagger angle α at 100% of the span is less than 62°. In a further example, the stagger angle α at 100% of the span is 50-59°.

In a further embodiment, the stagger angle α at 25% of the span is less than 23 °, the stagger angle α at 50% of the span is less than 35°, the stagger angle α at 75% of the span is less than 48° and the stagger angle α at 100% of the span is less than 62°. In a further example, the stagger angle α at 25% of the span is 16-21°, the stagger angle α at 50% of the span is 28-33°, the stagger angle α at 75% of the span is 39-45° and the stagger angle α at 100% of the span is 50-59°.

In another embodiment, each of the propulsor blades 74 includes a stagger angle α₇₅ at 75% of the span and a stagger angle α₂₅ at 25% of the span such that a ratio of α₇₅ / α₂₅ (α₇₅ divided by α₂₅) is 1.7-2.9. In a further example, the ratio of α₇₅ / α₂₅ is 2.1-2.5.

In general, the selected stagger angles α or stagger angle α profile P may follow an inverse relationship to the design bypass ratio of the engine 20 with regard to the amount of air that passes through the bypass flow passage B and the amount of air that passes through the core flow passage C such that lower stagger angles correspond to higher bypass ratio designs, and vice versa.

In further examples, the above-disclosed stagger angles α or stagger angle α profiles P additionally include one or more of the below-disclosed characteristics.

In embodiments, the propulsor 42 includes a number (N) of the propulsor blades 74 in the row 72 that is no more than 20. For instance, the number N is from 10 to 20.

In embodiments, the design pressure ratio, as described above, is from 1.1 to 1.55. In a further example, the design pressure ratio is from 1.1 to 1.35 or from 1.35 to 1.55.

Additionally, the propulsor blades 74 define a solidity value with regard to the chord dimension CD at the tips 80 and the circumferential pitch CP. The solidity value is defined as a ratio (R) of CD/CP (CD divided by CP). In one example, the solidity value of the propulsor 42 is between 0.6 and 1.3.

The above-described examples are each also embodied in a method for controlling propulsion losses in the gas turbine engine 20. For example, the method includes establishing a design pressure ratio that is from 1.1 to 1.55 with regard to an inlet pressure and an outlet pressure of the bypass flow passage B in which the propulsor 42 of the gas turbine engine 20 is located and, in response to the design pressure ratio, establishing the stagger angle α to be less than 62° at all positions along the span. In further examples of the method, the design pressure ratio and the stagger angles α are as described herein above.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. A gas turbine engine (20) comprising:
a spool (30);
a turbine (46) coupled with said spool (30);
a propulsor (42) coupled to be rotated about an axis (A) through said spool (30); and
a gear assembly (48) coupled between said propulsor (42) and said spool (30) such that rotation of said spool (30) results in rotation of said propulsor (42) at a different speed than said spool (30),
said propulsor (42) including a hub (76) and a row of propulsor blades (74) extending from said hub (76), each of said propulsor blades (74) having a span between a root (78) at said hub (76) and a tip (80), and a chord (85) between a leading edge (82) and a trailing edge (84) such that said chord (85) forms a stagger angle α with said axis (A), and said stagger angle α is less than 62° at all positions along said span, with said hub (76) being at 0% of said span and said tip (80) being at 100% of said span.

2. The gas turbine engine as recited in claim 1, wherein said stagger angle α at 25% of said span is less than 23°.

3. The gas turbine engine as recited in claim 1 or 2, wherein said stagger angle α at 25% of said span is 16-21°.

4. The gas turbine engine as recited in any preceding claim, wherein said stagger angle α at 50% of said span is less than 35°.

5. The gas turbine engine as recited in any preceding claim, wherein said stagger angle α at 50% of said span is 28-33°.

6. The gas turbine engine as recited in any preceding claim, wherein said stagger angle α at 75% of said span is less than 48°.

7. The gas turbine engine as recited in any preceding claim, wherein said stagger angle α at 75% of said span is 39-45°.

8. The gas turbine engine as recited in any preceding claim, wherein said stagger angle α at 100% of said span is less than 62°.

9. The gas turbine engine as recited in any preceding claim, wherein said stagger angle α at 100% of said span is 50-59°.

10. The gas turbine engine as recited in any preceding claim, wherein each of said propulsor blades (74) includes a stagger angle α₇₅ at 75% of said span and a stagger angle α₂₅ at 25% of said span such that a ratio of α₇₅ / α₂₅ is 1.7-2.9.

11. The gas turbine engine as recited in any preceding claim, wherein each of said propulsor blades (74) includes a stagger angle α₇₅ at 75% of said span and a stagger angle α₂₅ at 25% of said span such that a ratio of α₇₅ / α₂₅ is 2.1-2.5.

12. The gas turbine engine as recited in any preceding claim, wherein said propulsor (42) is located at an inlet (60) of a bypass flow passage (B) having a design pressure ratio that is from 1.1 to 1.55 with regard to an inlet pressure and an outlet pressure of said bypass flow passage (B).

13. The gas turbine engine as recited in any preceding claim, wherein said propulsor is located at an inlet (60) of a bypass flow passage (B) having a design pressure ratio that is from 1.1 to 1.35 with regard to an inlet pressure and an outlet pressure of said bypass flow passage.

14. The gas turbine engine as recited in any of claims 1 to 13, wherein said propulsor is located at an inlet of a bypass flow passage having a design pressure ratio that is from 1.35 to 1.55 with regard to an inlet pressure and an outlet pressure of said bypass flow passage.

15. The gas turbine engine as recited in any preceding claim, wherein said chord has a chord dimension (CD) at said tips, said row of propulsor blades defines a circumferential pitch (CP) with regard to said tips, and said row of propulsor blades has a solidity value (R) defined as CD/CP that is from 0.6 to 1.3.
